# EUROPÄISCHE PATENTANMELDUNG

(11) **EP 1 243 834 A1**
(43) Veröffentlichungstag der Anmeldung: **25.09.2002**
(21) Anmeldenummer: 02006230.3
(22) Anmeldetag: 20.03.2002
(51) Int. Cl.: F16L 27/08

(54) **Gelenkverbindung an Rohren für Dächer oder dergleichen**

(30) Priorität: 23.03.2001 DE 10114369
(71) Anmelder: Lafarge Roof System Components GmbH & Co. KG, 61437 Oberursel (DE)
(72) Erfinder: Müller, Harald, 58256 Ennepetal (DE); Riedel, Bernd, 58285 Gevelsberg (DE); Hülsenbeck, Sigfried, 58285 Gevelsberg (DE)
(74) Vertreter: Grundmann, Dirk, Dr.

(57) **Zusammenfassung**

Die Erfindung bezieht sich auf eine Gelenkverbindung (G) an Rohren (1), insbesondere an Entlüftungsrohren für Dächer oder dergleichen, bei der zwei Rohrabschnitte (1',1'') mit ihren jeweils schief zur jeweiligen Mittelachse (x-x bzw. y-y) ausgerichteten, kreisrunden Öffnungen (Ö',Ö'') in einer schiefwinkligen Trennebene (E-E) miteinander in wahlweiser Drehstellung zueinander verbunden sind und schlägt zur Erzielung einer baulich sowie strömungstechnisch verbesserten Lösung vor, dass die Öffnungen (Ö',Ö'') von im Wege einer Steckverrastung drehfest aneinander steckbaren Flanschabschnitten (2,3) ausgebildet sind.

## Beschreibung

Die Erfindung bezieht sich auf eine Gelenkverbindung an Rohren, insbesondere an Entlüftungsrohren für Dächer oder dergleichen, bei der zwei Rohrabschnitte mit ihren jeweils schief zur jeweiligen Mittelachse ausgerichteten, kreisrunden Öffnungen in einer schiefwinkligen Trennebene miteinander in wahlweiser Drehstellung zueinander verbunden sind.

Eine Gelenkverbindung dieser Art ist aus der DE-OS 43 14 675 bekannt. Über eine solche Gelenkverbindung lassen sich Richtungsänderungen des Rohres vornehmen. Das hat seinen Nutzen in der Praxis vor allem an schrägstehenden Dachflächen; der dachhautfernere Rohrabschnitt kann so in die Lotrechte gebracht werden. Verbindungsmittel der Rohrabschnitte ist ein trennebenenparallele Öffnungsränder der Rohrabschnitte übergreifender Ring mit angeformten Rastnasen.

Aufgabe der Erfindung ist es, eine gattungsgemäße Gelenkverbindung baulich und strömungstechnisch vorteilhaft weiterzubilden.

Diese Aufgabe ist zunächst und im Wesentlichen bei einer Gelenkverbindung mit den Merkmalen des Anspruchs 1 gelöst, wobei darauf abgestellt ist, dass die Öffnungen von im Wege einer Steckverrastung drehfest aneinander steckbaren Flanschabschnitten ausgebildet sind. Die schiefgestellten, kreisrunden Öffnungen der Flanschabschnitte sind nach Durchführung der gewünschten Ausrichtung im Wege der Zuordnung steckverrastet, und so gegen Drehbewegung zueinander gesichert. Die Rohrabschnitte sind an sich selbst verrastet. Ein besonderer Ring ist entbehrlich. Die Rastmittel sind baulich einfach und lassen sich beim Spritzformen gleich mit berücksichtigen. Diesbezüglich wird vorgeschlagen, dass der eine kreisrunde Flanschabschnitt umfangsverteilt Zahnlücken aufweist zum Einstecken mindestens einer Sperrnase des anderen kreisrunden Flanschabschnittes. Dabei wird weiter so vorgegangen, dass die Zahnlücken einen insbesondere der Stirnseite des Flanschabschnittes zugeordneten Zahnlückenkranz bilden. Bei enger Zahnteilung wird nahezu eine einer stufenlosen Verstellung gleichkommende Verstellbarkeit erreicht. Vorteilhaft ist es weiter, dass die Flanschabschnitte einander übergreifen. Dabei liegt der übergreifende Flanschabschnitt mit seiner Mündung der Dachhaut näher. Der Flanschabschnitt des übergreifenden Rohrabschnittes fungiert so als Dichtungsschürze; daher kann eine besondere Dichtung entfallen. Weiter bringt die Erfindung in Vorschlag, dass der Flanschabschnitt über einen Zwickelabschnitt oder über einen Freiform-Flächenabschnitt in den jeweiligen Rohrabschnitt übergeht. Hierüber lässt sich dieschiefwinklige Trennebene ganz oder anteilig erreichen. Als zuordnungstechnisch vorteilhaft erweist sich sodann das Merkmal, dass der eine Rohrabschnitt mit seinem der schiefen Öffnung gegenüberliegenden Öffnungsabschnitt im Wege einer Steckverrastung drehfest in wahlweisen Winkelstellungen mit einer Befestigungsplatte verbunden ist. So ergibt sich ein zweites die Ausrichtung der geometrischen Achsen der Rohrabschnitte betreffendes Verstellzentrum. Dabei ist weiter so vorgegangen, dass der Öffnungsabschnitt einen Ringstutzen der Befestigungsplatte überfängt. Der Ringstutzen hat so passstiftartige Funktion und zugleich die eines Strömungsdurchlasses zum Unterflurbereich der Dachhaut hin. Zuordnungstechnisch vorteilhaft ist überdies die Maßnahme, dass der Öffnungsabschnitt einen von Rasthakten der Befestigungsplatte übergriffenen Ringscheibenkragen aufweist. Das führt insgesamt auch zu einem rotationsymmetrisch winkelförmigen, standstabilen Fuß des-einen Rohrabschnitts. So kann recht dünnwandig gearbeitet werden. Die besagte Steckverrastung lässt sich mit einfachen Mitteln dadurch erreichen, dass der Ringscheibenkragen umfangsverteilte Löcher besitzt zum Eintritt mindestens eines der Befestigungsplatte zugeordneten Sperrdorns. Bevorzugt sind mehrere solcher Dorne realisiert. Diese sitzen zweckmäßig auf der Winkelhalbierenden zwischen den Rasthaken. Bevorzugt werden vier winkelgleich verteilt angeordnete Rasthaken angewandt. Weiter wird vorgeschlagen, dass der eine Rohrabschnitt zum Ringstutzen hin aufweitet. Der andere Ringabschnitt weitet zum Flanschabschnitt hin auf. Schließlich ist eine handhabungstechnisch vorteilhafte Ausgestaltung erreicht durch eine rasteingriffsfreie, drehlaufabgestützte Steck-Vorpositionierung der Rohrabschnitte zueinander. Das erlaubt ein ratterfreies Wählen der korrekten Rohrstellung. Ist diese eingestellt, wird der Eingriff der Rastmittel bewirkt.

Der Gegenstand der Erfindung ist nachstehend anhand eines zeichnerisch veranschaulichten Ausführungsbeispieles näher erläutert. Es zeigt:
- Fig. 1: die erfindungsgemäße Rohr-Gelenkverbindung in Seitenansicht,
- Fig. 2: dieselbe in Seitenansicht aus einem anderen Blickwinkel betrachtet,
- Fig. 3: den Schnitt gemäß Linie III-III in Figur 2,
- Fig. 4: einen Schnitt wie Figur 3 bei in die Lotrechte gebrachtem dachhautfernen Rohrabschnitt,
- Fig. 5: die Rohr-Gelenkverbindung aus der Froschperspektive gesehen, vertikal aufgeschnitten (Schnittebene ist die in Figur 2 angegebene Linie III-III),
- Fig. 6: im Ausschnitt eine Steck-Vorpositionierung der Rohr-Gelenkverbindung.

Das dargestellte Rohr 1 stellt einen Strömungsdurchlass durch eine Durchbrechung in einer nicht näher dargestellten Dachhaut.

Ein solches Entlüftungsrohr für Dächer ist im Hinblick auf eine möglichst exakt lotrechte Ausrichtung des Rohres 1 gegenüber der geneigten Dachfläche mit einer Gelenkverbindung G ausgerüstet. Es handelt sich um ein drehgelenk.

Die Drehgelenkebene ist zugleich die schiefwinklige Trennebene E-E des Rohres 1, welches konsequent aus miteinander verbundenen Rohrabschnitten des Rohres 1 besteht.

Der eine, untere, mit 1' bezeichnete Rohrabschnitt liegt der Dachhaut näher. Der andere, obere stecktechnisch zugeordnete Rohrabschnitt ist mit 1'' bezeichnet. Die jeweiligen Mittelachsen der genannten Rohrabschnitte sind x-x bzw. y-y. Die Mittelachse x-x des dachhautnahen Rohrabschnitts 1' steht senkrecht zur Neigungsebene der Dachfläche. Über die schiefwinklige Trennebene E-E lässt sich durch Drehen des anderen Rohrabschnitts 1'' dessen Mittelachse y-y in eine Lotrechte überführen.

Im Bereich der Gelenkverbindung G respektive der schiefwinkligen Trennebene E-E weisen die Rohraschnitte 1', 1'' kreisrunde Öffnungen auf. Die des einen Rohrabschnittes 1' ist mit Ö' bezeichnet, die des anderen Rohrabschnitts 1'' trägt das Bezugszeichen Ö''. Die besagten Öffnungen Ö', Ö'' liegen im Bereich einer Steckzone der Gelenkverbindung G. Dazu sind die Öffnungen Ö' und Ö'' entsprechend ausgebildet. Das realisiert sich in Form von Flanschabschnitten. Vom oberen Rohrabschnitt 1' geht ein Flanschabschnitt 2 aus. Der untere Rohrabschnitt 1'' endet oben in einen Flanschabschnitt 3. Beide Flanschabschnitte 2,3 sind wandungsmäßig im Wesentlichen zylindrisch ausgebildet.

Zur Erzielung einer Steckverbindung der Rohrabschnitte 1',1'' übergreifen ihre Flanschabschnitte 2,3 einander, und zwar etwa zwei Finger breit. Der mit 2 bezeichnete, vom oberen Rohrabschnitt 1'' ausgehende Flanschabschnitt umfasst die Mantelwand des Flanschabschnittes 3 des unteren Rohrabschnitts 1'.

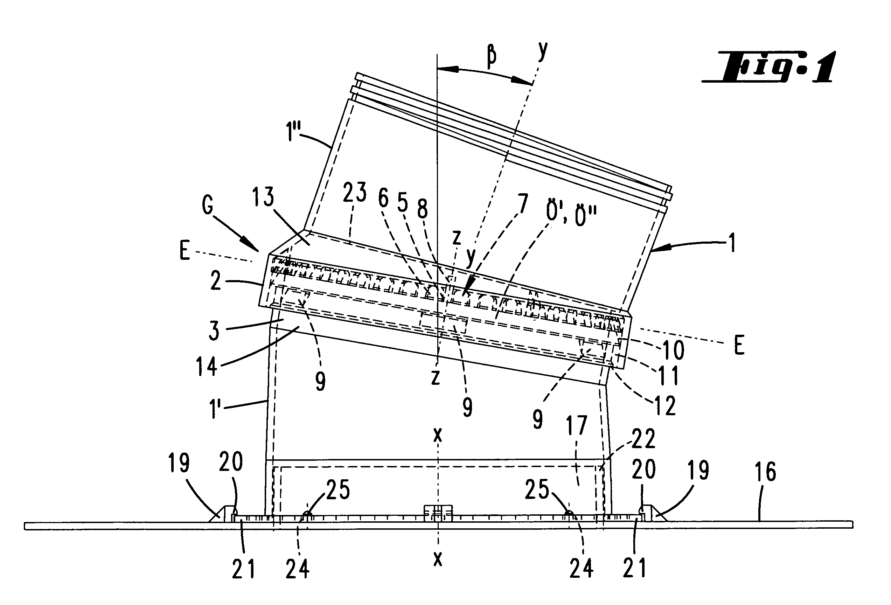

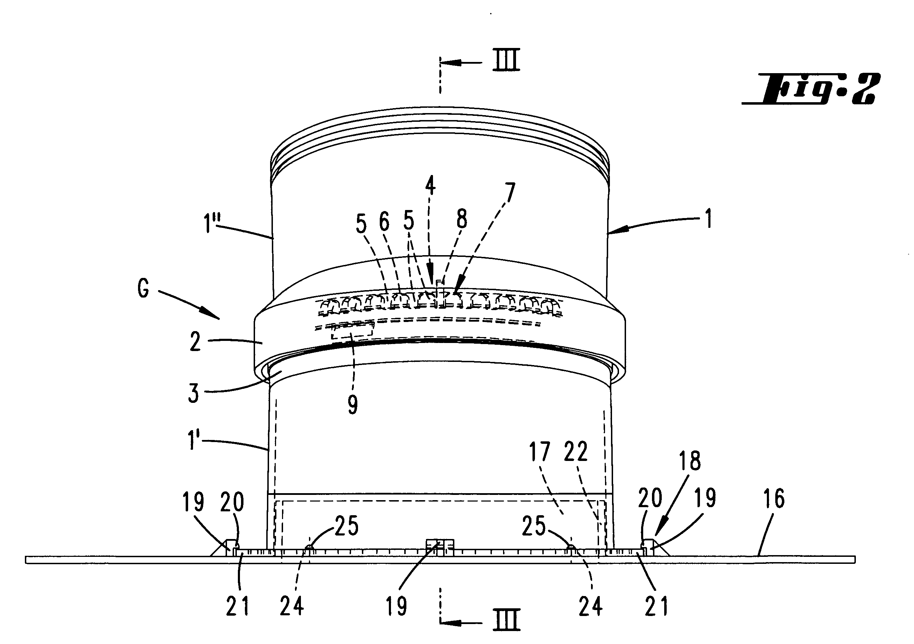

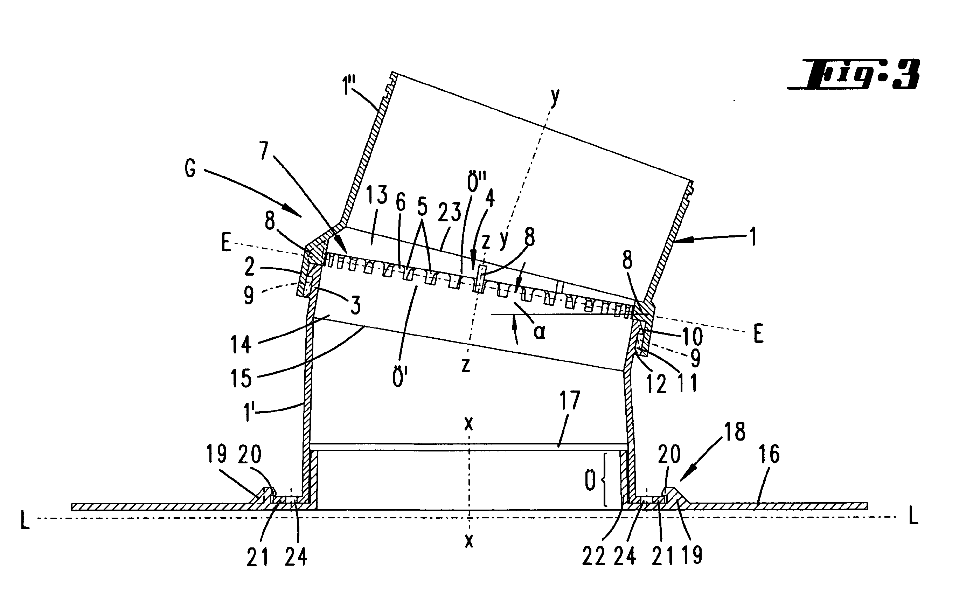

Die Mittelachse z-z der zylindrischen Flanschabschnitte 2,3 stehen senkrecht zur eingezeichneten Trennebene E-E des Rohres 1. Es sei auf Figur 3 verwiesen.

Die schiefwinklige Trennebene E-E und damit die Öffnungen Ö',Ö'' erstrecken sich in der in Figur 3 dargestellten Ausrichtung in einem spitzen Winkel Alpha von 10° zur Horizontalen bzw. zur von der Dachhaut bestimmten Basislinie L-L.

Wird nun, wie sich das aus Figur 3 ergibt, der obere Rohrabschnitt 1'' um 180° auf dem unteren Rohrabschnitt 1'' verdreht, so kommt es zu einer achsparallelen Ausrichtung der Mittelachse y-y des oberen Rohrabschnitts 1" zu der x-x des unteren Rohrabschnitts 1'. Bei einer Flachdach-Situation, bei der die Basislinie L-L auf einer Horizontalen läge, wäre die erstrebte lotrechte Ausrichtung des Rohres 1 so erreicht. Flachdächer von 0° bis 20°-Schrägungen lassen sich stellmäßig durch diese Rohr-Gelenkverbindung so praktisch stufenlos abdecken. Das kann sogar bis 90° gehen.

Die eingenommene Endstellung ist sicherbar, d.h. beispielsweise am anschließenden, nicht dargestellten Rohrabschnitt und/oder seiner Abschlusskappe wirkende Kräfte sind nicht in der Lage, die Stellung zu verfälschen. Die Rohrabschnitte 1',1'' befinden sich dazu im Bereich der kreisrunden Flanschabschnitte 2,3 in drehfester Steckverrastung. Diese Mittel liegen im Bereich der Übergreifzone der Öffnungen Ö',Ö'' bzw. der Flanschabschnitte 2,3.

Die Steckverrastungs-Vorrichtung ist in ihrer Gesamtheit mit 4 bezeichnet. Sie beruht konkret auf einem Zahneingriff. Dabei weist der eine kreisrunde Flanschabschnitt 3 Zahnlücken 5 auf. Die sind stirnseitig des Flanschabschnitts 3 des unteren Rohrabschnitts 1' realisiert. Die die Zahnlücken 5 definierenden Zähne tragen das Bezugszeichen 6. Sie stellen einen umlaufenden, entsprechend kreisrunden Zahnkranz 7.

Das entsprechende Gegeneingriffsmittel ist eine Sperrnase 8. Die befindet sich innenseitig an dem anderen kreisrunden Flanschabschnitt 2. Der taucht drehsperrend in eine Zahnlücke 5 des Zahnlückenkranzes ein. Zum besseren Einführen sind die Flanken der Zähne 6 kopfseitig gefast.

Die bei der Steckverrastung überlagernd eintretende Fesselung der beiden Rohrabschnitte 1',1'' geschieht mit bordeigenen Mitteln und nicht durch einen separaten Ring. Realisiert ist das durch eine Rastnase 9. Die befindet sich, in einer Fuge zwischen den beiden Flanschabschnitten 2,3 untergebracht, an der Innenwand des Flanschabschnitts 2 des oberen Rohrabschnitts 1''. Die Rastnase 9 untergreift mit einer steilen Flanke die entsprechend steil ausgerichtete Gegenflanke eines in Steckrichtung überlaufbaren Ringbundes 10 an der Mantelwand des Flanschabschnitts 3. Der Ringbund 10 ist umlaufend durchgehend und setzt gleich unterhalb des Lückengrundes der Zahnlücken 5 peripher an.

Rastnase 9 und Ringbund 10 sind in Steckrichtung willensbetont überlaufbar. Die Rastnase 9 ist mehrfach vorgesehen. Es genügt, wenn drei winkelgleich versetzt ausgebildete Rastnasen 9 realisiert sind.

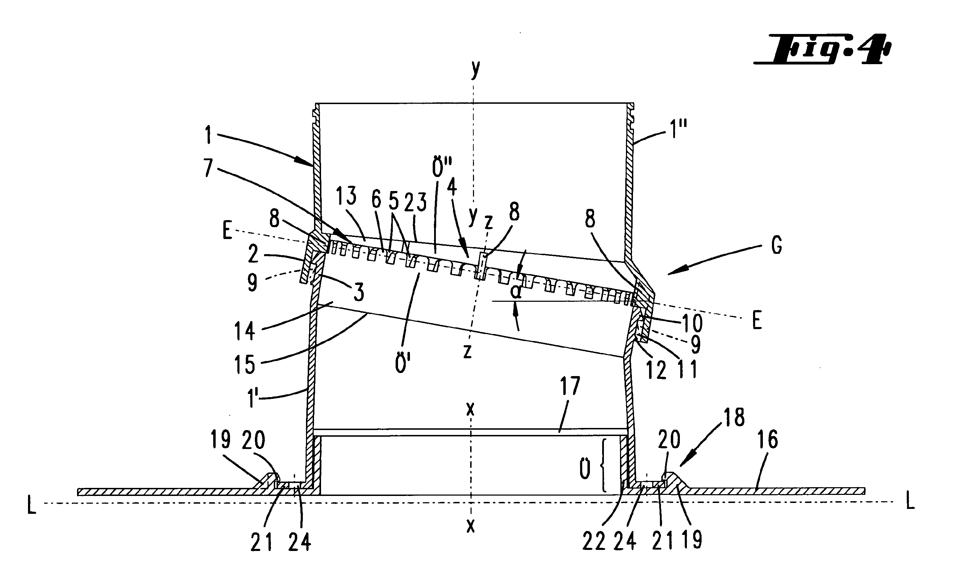

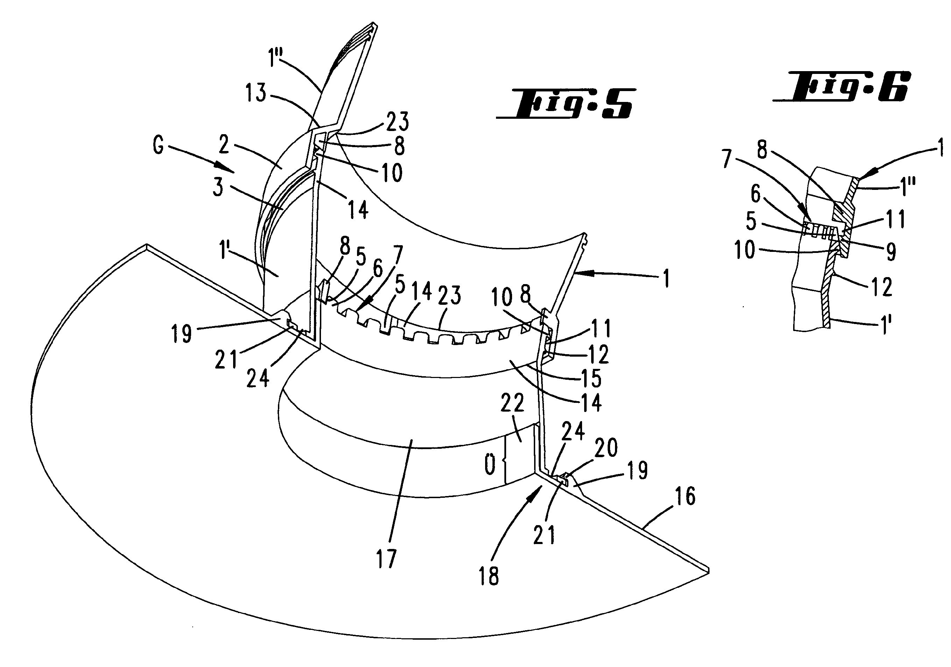

Der obere Rohrabschnitt 1'' stützt sich in einer Art Vorpositionierung über seine winkelgleich verteilten Rastnasen 9 zunächst an dem Gegenrastmittel, also dem umlaufend ausgebildeten Ringbund 10 des unteren Rohrabschnitts 1' ab. Es liegt dabei Nasenrücken an Nasenrükken (vgl. Figur 6). Die Sperrnase 8 kann demgemäß nicht in die Zahnlücken 5 drehsperrend eingreifen. Der Monteur ist daher in der Lage, in Ruhe die gewünschte Dreh-Position ratterfrei zu wählen. Ist sie erreicht, bedarf es nur noch einer restlichen Steck-Verlagerung des oberen Rohrabschnitts 1'' gegen den Unteren in der geschilderten Weise. Die Rastnasen 9 schnäppern über den Ringbund 10. Die Stellung ist dann drehgesichert. Sie kann irreversibler Art sein.

Die Schrägung setzt sich voll in den außenseitigen Rücken der Zähne 6 fort, so dass ein auch den Zahnlükkenkranz-Bereich erfassender Zentrierkonus des Flanschabschnitts vorliegt. Die Zahnschrägung kann noch etwas hinter die des konischen Ringbundes 10 zurückgehen.

Die Sperrnase 8 tritt auf einer Senkrechten zur schiefen Trennebene E-E ein. Der obere Rohrabschnitt 1'' lässt sich in einem Richtungskegel Beta von ca. 20° verstellen. Die Basis dazu, gestellt vom unteren Rohrabschnitt 1' kann neigungsmäßig verstellt werden, so dass ein nahezu stufenloses Ausrichten des dominierenden oberen Rohrabschnitts 1'', der durch koaxiale Teile wie ein Lüfterrohr, verlängert wird, erreicht ist. Die Gelenkverbindung G fällt als - wenn auch moderater - "Krümmer" kaum optisch-visuell auf, da sie dachhautnah ausgebildet ist. Die mittlere Länge des unteren Rohrabschnitts 1' entspricht etwa dem Radius bis maximal dem Durchmesser des genannten Rohrabschnitts 1'.

Den Eingang eines nach unten offenen Ringspaltes 11 zwischen den Flanschabschnitten 2,3 verschließt partiell eine umlaufende Ringrippe 12.

Hinsichtlich der Sperrnasen 8 bleibt noch auszuführen, dass diese auch in Mehrzahl zugeordnet sein können, beispielsweise vier winkelgleich Verteilte. Selbstredend sind diese auf den Rapport der Zahnlückenfolge positionsmäßig abgestimmt.

Unter weitestgehend einengungsfreier Ausbildung des Rohrquerschnitts im Bereich der Gelenkverbindung G ist diese Zone im sinne einer ausreichenden lichten Weite gestaltet. Hierzu dient bezüglich des oberen Rohrabschnitts 1'' eine praktisch exzentrisch ausgeführte Ausstellzone, gebildet von einem Zwickelabschnitt 13. Der schließt dachhautseitig am oberen Rand des zylindrisch gestalteten Flanschabschnitts an und läuft nach oben hin in den Grundquerschnitt des oberen Rohrabschnitts 1'' ein. Die Zwickelspitze läuft im Wesentlichen in einer Projektionslinie der Rohrmantelwandung der rechtsseitigen Auskeilung aus. Die ausdachende Zone des Zwickelabschnitts 13 ist linksseitig liegend.

Am Flanschabschnitt 3 ist die entsprechende Erweiterung durch praktisch schräges Ansetzen des dortigen zylindrischen Flanschabschnitts 3 zur Wandung des unteren Rohrabschnitts 1' hin erreicht. Diese Zone ist als von dem Rohrverlauf abweichender, winklig gestalteter Freiform-Flächenabschnitt 14 realisiert, der in den unteren Rohrabschnitt 1' übergeht. Der entsprechende Richtungsübergang ist im Ansatz durch eine Linie 15 verdeutlicht.

Das Rohr 1 geht von einer Platte aus, an der es befestigt ist. Diese Befestigungsplatte trägt das Symbol 16. Es handelt sich um eine kreisrunde Scheibe. Deren Radius entspricht etwa dem Durchmesser des Rohres 1. Angedockt an die Befestigungsplatte 16 ist der eine bzw. untere Rohrabschnitt 1'. Der ist mit seinem der schiefen Öffnung Ö' gegenüberliegenden Öffnungsabschnitt 17 im Wege der Steckverrastung drehfest in wahlweisen Winkelstellungen mit der Befestigungsplatte 16 verbindbar. Diese Steckverrastungs-Vorrichtung 18 besteht befestigungsplattenseitig aus einem Rasthaken 19. Dessen Rastkopf 20 übergreift sperrend die Peripherie eines dem unteren Rand des unteren Rohrabschnitts 1' angeformten Ringscheibenkragens 21.

Dieser flanschartige, nach auswärts gerichtete, -auf der Oberseite der Befestigungsplatte 16 ruhende Ringscheibenkragen 21 bildet zusammen mit der Rohrwandung einen stabilen, rotationssymmetrischen Stellfuß des Rohres 1. Der ist innenseitig noch durch einen Ringstutzen 22 abgestützt, welcher Ringstutzen 22 den Öffnungsasabschnitt 17 von unten her überfängt. Die entsprechend vorliegende Überlappungszone trägt das Bezugszeichen Ü. Der überlappende Abschnitt des unteren Rohrabschnitts 1' ist zylindrisch, ebenso der kragenbildende, zugleich eine Art Passstiftfunktion übernehmende Ringstutzen 22.

Der lichte Durchmesser des Ringstutzens 22 entspricht dem des zylindrischen Freiform-Flächenabschnitts 14, des Flanschabschnitts 3 also, und dem des oberen Rohrabschnitts 1''.

Wie beispielsweise Figur 3 zeigt, weitet der eine Rohrabschnitt 1' zum Ringstutzen 22 hin auf. Die Aufweitung kompensiert den Wandungsversprung zwischen dem Ringstutzen 22 und dem Freiform-Flächenabschnitt 14.

Der andere, obere Rohrabschnitt 1'' weitet hingegen zum Flanschabschnitt 2 hin auf, hier aber moderater, und zwar endend auf einer Linie 23 als Grenze zwischen dem praktisch zylindrischen Wandungsverlauf des Rohrabschnitts 1'' und dem anschließenden Zwickelabschnitt 13.

Neben der axialen Fesselung des Rohres 1 über die in Mehrzahl vorgesehenen Rasthaken 19 ist auch eine Drehsicherung in Bezug auf die Befestigungsplatte 16 hin vorgesehen. Die verkörpert sich rohrseitig darin, dass der Ringscheibenkragen 21 in enger Folge umfangsverteilte Löcher 24 besitzt. Deren geometrische Achse verläuft raumparallel zur Achse x-x des unteren Rohrabschnitts 1'. In die bevorzugt im Rapport der Zahnlücken 5 vorgesehenen Löcher 24 treten passende Sperrdorne 25. Die gehen als Stehzapfen von der Oberseite der Befestigungsplatte 16 aus. Ihre freien Enden weisen zur besseren Einlenkung bzw. Steckfindung einen praktisch kegelstumpfförmigen Kopf auf, dessen Basis in den zylindrischen Schaft des Sperrdornes 25 übergeht.

Es sind mehrere solche Sperrdorne 25 realisiert. Sie sitzen auf der Winkelhallbierenden zwischen den Rasthaken 19.

Über die Verrastung des unteren Rohrabschnitts 1' lässt sich eine Vor-Einstellung der Ausrichtung der schiefwinkligen Trennebene E-E bewirken. Dabei sind über den oberen Rohrabschnitt 1'' bei der Montage einfließende Reibkräfte unter Suchen der genauen Verrastungsposition nicht in der Lage, die Basisausrichtung des unteren Rohrabschnittes 1' zu verwischen.

Insgesamt ist ein leicht montierbares Rohr 1 mit Gelenkverbindung G erzielt, dies bei verbesserter Strömungseigenschaft im Rohr 1, da taillenartige Einziehungen im Bereich der Richtungsänderung der verschiedenen Querschnittsabschnitte durch die erfindungsgemäße Lösung vermieden sind.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Gelenkverbindung (G) an Rohren (1), insbesondere an Entlüftungsrohren für Dächer oder dergleichen, bei der zwei Rohrabschnitte (1',1'') mit ihren jeweils schief zur jeweiligen Mittelachse (x-x bzw. y-y) ausgerichteten, kreisrunden Öffnungen (Ö',Ö'') in einer schiefwinkligen Trennebene (E-E) miteinander in wahlweiser Drehstellung zueinander verbunden sind, **dadurch gekennzeichnet, dass** die Öffnungen (Ö',Ö'') von im Wege einer Steckverrastung drehfest aneinander steckbaren Flanschabschnitten (2,3) ausgebildet sind.

2. Gelenkverbindung nach Anspruch 1 oder insbesondere danach, **dadurch gekennzeichnet, dass** der eine kreisrunde Flanschabschnitt (3) umfangsverteilt Zahnlücken (15) aufweist zum Einstecken mindestens einer Sperrnase (8) des anderen kreisrunden Flanschabschnitts (2).

3. Gelenkverbindung nach einem oder mehreren der vorhergehenden Ansprüche oder insbesondere danach, **dadurch gekennzeichnet, dass** die Zahnlücken (5) einen insbesondere der Stirnseite des Flanschabschnittes (3) zugeordneten Zahnlückenkranz (7) bilden.

4. Gelenkverbindung nach einem oder mehreren der vorhergehenden Ansprüche oder insbesondere danach, **dadurch gekennzeichnet, dass** die Flanschabschnitte (2,3) einander übergreifen.

5. Gelenkverbindung nach einem oder mehreren der vorhergehenden Ansprüche oder insbesondere danach, **dadurch gekennzeichnet, dass** der Flanschabschnitt (2 bzw. 3) über einen Zwickelabschnitt (13) oder über einen Freiform-Flächenabschnitt (14) in den Rohrabschnitt (1'bzw. 1'') übergeht.

6. Gelenkverbindung nach einem oder mehreren der vorhergehenden Ansprüche oder insbesondere danach, **dadurch gekennzeichnet, dass** der eine Rohrabschnitt (1') mit seinem der schiefen Öffnung (Ö') gegenüberliegenden Öffnungsabschnitt (17) im Wege einer Steckverrastung drehfest in wahlweisen Winkelstellungen mit einer Befestigungsplatte (16) verbunden ist.

7. Gelenkverbindung nach einem oder mehreren der vorhergehenden Ansprüche oder insbesondere danach, **dadurch gekennzeichnet, dass** der Öffnungsabschnitt (17) einen Ringstutzen (22) der Befestigungsplatte (16) überfängt.

8. Gelenkverbindung nach einem oder mehreren der vorhergehenden Ansprüche oder insbesondere danach, **dadurch gekennzeichnet, dass** der Öffnungsabschnitt (17) einen von Rasthaken (19) der Befestigungsplatte (16) übergriffenen Ringscheibenkragen (21) aufweist.

9. Gelenkverbindung nach einem oder mehreren der vorhergehenden Ansprüche oder insbesondere danach, **dadurch gekennzeichnet, dass** der Ringscheibenkragen (21) umfangsverteilte Löcher (24) besitzt zum Eintritt mindestens eines der Befestigungsplatte (16) zugeordneten Sperrdorns (25).

10. Gelenkverbindung nach einem oder mehreren der vorhergehenden Ansprüche oder insbesondere danach, **dadurch gekennzeichnet, dass** die Sperrdorne (25) auf der Winkelhalbierenden zwischen den Rasthaken(19) liegen.

11. Gelenkverbindung nach einem oder mehreren der vorhergehenden Ansprüche oder insbesondere danach, **dadurch gekennzeichnet, dass** der eine Rohrabschnitt (1') zum Ringstutzen (22) hin aufweitet.

12. Gelenkverbindung nach einem oder mehreren der vorhergehenden Ansprüche oder insbesondere danach, **dadurch gekennzeichnet, dass** der andere Rohrabschnitt (1'') zum Flanschabschnitt (2) hin aufweitet.

13. Gelenkverbindung nach einem oder mehreren der vorhergehenden Ansprüche oder insbesondere danach, **gekennzeichnet durch** eine rasteingriffsfreie, drehlaufabgestützte Steck-Vorpositionierung der Rohrabschnitte (1',1'') zueinander.
